# EUROPEAN PATENT SPECIFICATION

(11) **EP 3 875 779 B1**
(45) Date of publication and mention of the grant of the patent: **24.12.2025**
(21) Application number: 21161379.9
(22) Date of filing: 08.03.2021
(51) Int. Cl.: F04D 29/58, F04D 1/00, F04D 13/06, H02K 5/18, H02K 9/06, H02K 9/14, H02K 11/33, F04D 25/08

(54) **PUMP ASSEMBLY AND IMPROVED FAN SHROUD THEREFOR**
PUMPENANORDNUNG UND VERBESSERTE LÜFTERABDECKUNG DAFÜR
ENSEMBLE POMPE ET DÉFLECTEUR DE VENTILATEUR AMÉLIORÉ CORRESPONDANT

(30) Priority: 06.03.2020 US 202062986417 P
(43) Date of publication of application: 08.09.2021
(73) Proprietor: Pentair Water Pool and Spa, Inc., Cary, NC 27518 (US); Danfoss Power Electronics A/S, 6300 Gråsten (DK)
(72) Inventor: MILLER, James, Sanford, NC North Carolina 27330 (US); ROLAND, Montie, Sanford, NC North Carolina 27330 (US); STEWART, Kevin, Apex, NC North Carolina 27502 (US); DRABEK, Ryan, Loves Park, il Illinois 61111 (US); MILLER, George, Loves Park, il Illinois 61111 (US); RINK, Shawn, Loves Park, il Illinois 61111 (US); GARCIA, Marvin, Loves Park, il Illinois 61111 (US)
(74) Representative: Barker Brettell LLP

(56) References cited:
- EP-A2- 2 482 428
- CN-U- 207 234 614
- JP-A- 2012 110 151
- JP-A- H11 341 743
- US-A1- 2013 076 172

## Description

### BACKGROUND

Aquatic systems, such as swimming pools, commonly use motorized pumps to move volumes of water into and across various systems. The pumps are powered by motor and drive components to form a pump assembly that is typically used in connection with other aquatic system components to recirculate, heat, cool, chemically treat, and/or filter the water in the swimming pool, spa, or other type of aquatic system. Conventional pump assemblies utilize a fan-based cooling system to cool the motor and drive components, which produce heat during operation of the pump.

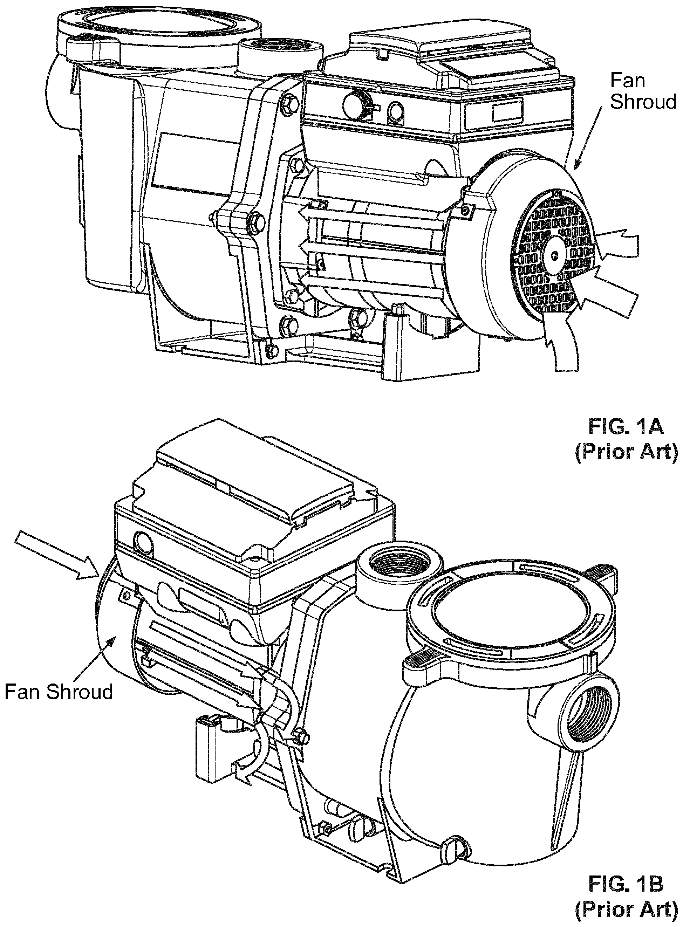

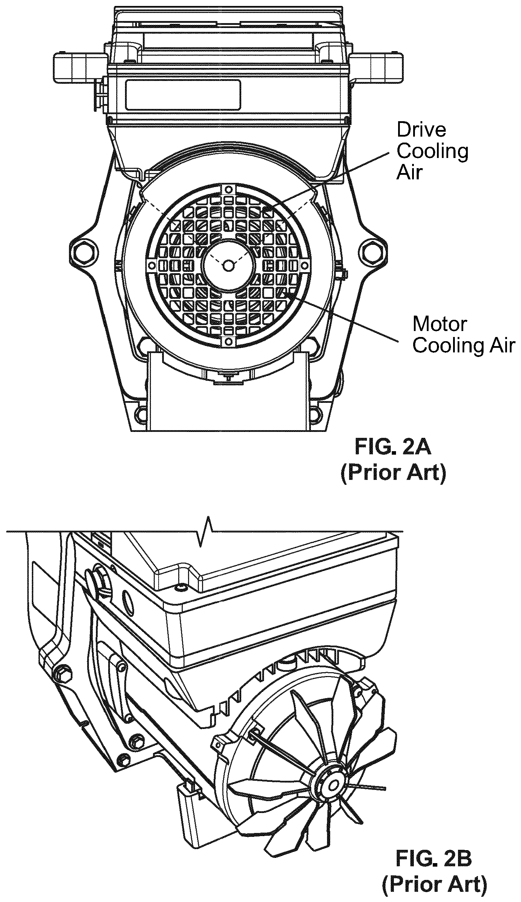

FIGS. 1A-2B illustrate a conventional pump assembly and its cooling operation. A fan attached to a rotor portion of the motor draws cool air in at a rear bell end of the motor, and a small fan shroud is attached to the rear bell end of the motor, covering the fan. As best shown in FIG. 2A, fan shrouds of conventional systems typically extend over only the rear bell end of the motor and are configured to direct a portion of the drawn-in air over fins of a drive heat sink while the remainder of the air is directed horizontally across the surface of the motor housing to collectively cool the motor and drive components. FIG. 2B illustrates the conventional pump assembly with the fan shroud removed, exposing the fan and the fins of the drive heat sink.

While the fan shroud cooling system for conventional type pump assemblies provide cooling for the motor and drive components during operation of the pump via the drawn-in cool air, the process can present some inefficiencies. Not only does a significant amount of cool air directed across the motor housing dissipate before traveling the entire length of the motor, but the partitioning of air between the motor and the drive heat sink means that the drive encounters less of the cool air. Each of these factors can reduce the effectiveness and efficiency of the fan shroud cooling systems currently used in conventional pump assemblies. Accordingly, a need exists for a more effective and efficient fan shroud cooling system for pump assemblies to cool the motor and drive components of the assembly.

JP2012110151 A describes a motor assembly which includes: a motor coupled to a pump; an inverter fixed to a side part of the motor and having a cooling fin; a fan mechanism disposed inside the inverter and agitating a gas in the inverter; a cooling fan attached to a rotation shaft of the motor and disposed at the motor on the opposite side of the pump; a cover covering at least a part of the motor and the cooling fan and disposed so as to form a gap with the motor ; and at least a guide member disposed at the gap between the motor and the cover. The guide member has a shape which leads a gas from the cooling fan to the cooling fin of the inverter.

EP2482428 A2 describes an electric rotary machine assembly, being suitable to be constructed in one body, including various kinds of circuit boards, and further a noise filter and a capacitor therein, including a permanent-magnet type electric rotary machine, a power converter, a part(s) for building up the power converter, a control and interface board for inputting/outputting between an outside thereof and also for controlling an operation of the electric rotary machine through the power converter, and a terminal box including a noise filter therein, in one body within a cover, wherein a cooling fan is attached on one end portion of that cover, the power converter is attached on a plane portion formed in a part of a housing, which is attached on an outer periphery of an armature of the electric rotary machine and formed with plural numbers of fines on an outer
periphery thereof, and in other portions of the housing are disposed the part(s) and the control and interface board between the cooling fins thereof and an inner peripheral surface of the cover, and the noise filter is attached in a part of the cover.

US2013076172 A1 describes an electric motor that includes a first electric motor frame; a second electric motor frame positioned outside the first electric motor frame; a first ventilation path between the first frame and the second frame; and a first ventilation path fan installed within the first ventilation path. The first ventilation path fan can be integral with a shaft of the electric motor. The first ventilation path can be at least partially defined by the first and second electric motor frame. The electric motor further comprising a control apparatus attached outside of the second frame. The electric motor can also include a second ventilation path between the control apparatus and the second frame wherein the second ventilation path is in communication with the first ventilation path. The electric motor can also include a second ventilation path fan located in the second ventilation path.
CN207234614 U describes an electric motor for a swimming pool pump that comprises a motor body, an impeller mounted on a rotor shaft of the motor body. A rear portion of the motor body is provided with a front end cover at the front end of the motor body and a rear end cover at the rear end of the motor body. At the front of the impeller, front-end air outlet slots are provided on both sides of the front-end cover, and the rear-end cover is on the rear-end cover. A rear air inlet slot is evenly arranged around the periphery; and a protective cover is also included, and the protective cover covers the outside of the impeller and the outer cover of the rear end cover or the motor body.

### SUMMARY

According to the invention, there is provided a pump assembly having a pump, a motor, fan shroud, and a drive, as defined in claim 1. Optional and/or preferable features are set out in dependent claims 2-8.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the fan shroud and/or pump assembly may have corresponding features definable and/or combinable with respect to a method or vice versa. However, the scope of the invention is solely defined by the appended claims.

### DESCRIPTION OF THE DRAWINGS

The accompanying drawings, which are incorporated in and form a part of this specification, illustrate embodiments of the invention and, together with the description, serve to explain the principles of embodiments of the invention:
FIG. 1A is a rear isometric view of a conventional prior art pump assembly illustrating the fan shroud cooling system for the motor and drive components;
FIG. 1B is a front isometric view of the conventional prior art pump assembly of FIG. 1A;
FIG. 2A is a rear elevational view of the conventional prior art pump assembly of FIG. 1;
FIG. 2B is a partial rear isometric view of the conventional prior art pump assembly of FIG. 1 with some portions removed for clarity;
FIG. 3 is a side elevational view of a pump assembly according to an embodiment which does not belong to the claimed invention;
FIG. 4 is a rear, bottom, isometric view of the pump assembly of FIG. 3;
FIG. 5 is a partial rear isometric view of a pump assembly according to one embodiment of the present invention;
FIG. 6A is a partial rear isometric view of a pump assembly according to another embodiment of the present invention;
FIG. 6B is a partial rear isometric view of the pump assembly of FIG. 6A with some portions removed for clarity;
FIG. 6C is a partial rear isometric view of the pump assembly of FIG. 6A with some portions removed for clarity;
FIG. 7A is a partial side view of one embodiment of the pump assembly of FIG. 6A;
FIG. 7B is a partial side view of one embodiment of the pump assembly of FIG. 6A; and
FIG. 7C is a partial side view of one embodiment of the pump assembly of FIG. 6A.

### DETAILED DESCRIPTION

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention. Thus, embodiments of the invention are not intended to be limited to embodiments shown, but are to be accorded the widest scope defined by the appended claims. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and may fall within the scope of embodiments of the invention which is defined by the claims.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

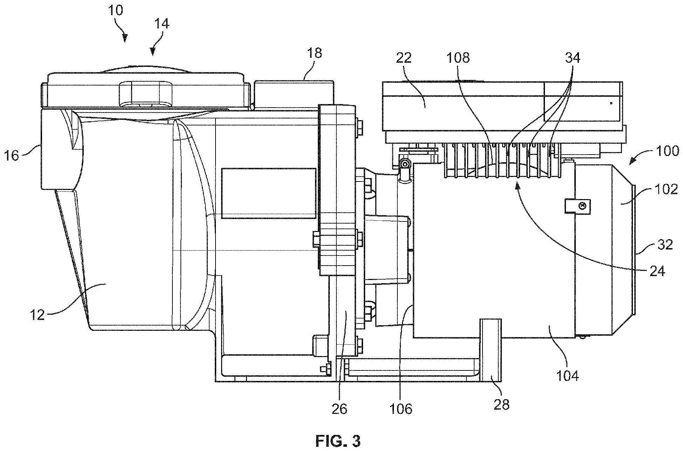

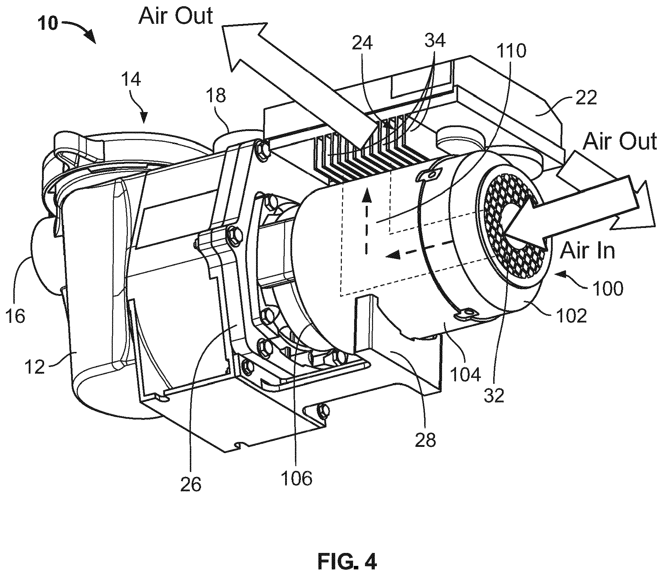

FIGS. 3 and 4 illustrate a pump assembly 10 according to one embodiment which does not belong to the claimed invention. The pump assembly 10 may be configured for use with swimming pools, spas, and other types of aquatic systems that require the movement of water. Structurally, the pump assembly 10 may include a housing 12, a pump unit 14 contained within the housing 12, an inlet port 16 for receiving water into the pump unit 14, and an outlet port 18 for expelling water from the pump unit 14. The pump unit 14 may have any suitable construction and configuration for providing a desired force to move water through an aquatic system, such as a swimming pool. According to one embodiment, the pump unit 14 may be configured as a centrifugal pump with rotatable impellers for forcing the flow of water through the pump assembly 10 from the inlet port 16 to the outlet port 18. The pump unit 14 may also be configured as any other type of motor-driven pump design suitable for forcing the flow of water.

The pump assembly 10 further includes a motor (not shown) and a control means or a drive 22 to power and operate the pump unit 14. According to one embodiment, the motor may be configured as a permanent magnet motor design to impart rotational force onto the pump unit 14. However, any other suitable motor design is considered within the scope of the present invention. The drive 22 may be configured as a variable speed drive or other suitable drive configuration for powering and controlling the motor and thereby controlling the operation of the pump unit 14. The drive 22 is also configured with a drive heat sink 24 that is adjacent to and extends downward from the drive 22 and that dissipates the heat generated by the drive 22 during operation of the motor. The control means or drive 22 may further be configured with a control panel to facilitate the operation of the pump assembly 10.

The motor may include a rear bell end and a body extending from the rear bell end toward the housing 12. The motor may also be encased by a motor housing. A shaft portion of the motor may extend through the housing 12 and connect to the pump unit 14 to power and operate the pump unit 14. The shaft portion of the motor may be secured to the housing 12 by means of a seal plate 26 mounted to the housing 12. The pump assembly 10 may further include a base or a frame component 28 positioned below the motor and configured to secure and stabilize the motor with respect to the housing 12. The particular construction and configuration of the housing 12, the pump unit 14, the motor, and the drive 22 are not intended to be construed as limitations of the present invention.

FIGS. 3 and 4 illustrate a fan shroud 100 according to one embodiment in connection with the pump assembly 10 as described herein. The fan shroud 100 may also be configured for use with any motorized pump system that requires cooling of pump system components including a motor and a drive.

The fan shroud 100 provides airflow across various motor and drive components to cool the motor and drive components during the operation of the pump assembly 10. The fan shroud 100 includes a fan shroud end cap 102 connected to the motor of the pump assembly 10, and an extended fan shroud shell sidewall 104 that surrounds the motor. The fan shroud 100 may further include a rectilinear opening 108 located at an upper portion of the shell sidewall 104 in order to assist in distributing airflow traveling through the fan shroud 100 across the heat sink 24 of the drive 22, adjacent to the motor, as discussed in more detail below.

The fan shroud end cap 102 is connected to the rear bell end of motor opposite the pump unit 14. The fan shroud end cap 102 includes a circular vented surface 32 at an end thereof that permits the inflow of outside air drawn by the fan (not shown) connected to the motor. The fan shroud end cap 102 is coupled to the shell sidewall 104. The shell sidewall 104 extends away from the fan shroud end cap 102, around the body of the motor, and along substantially the entire length of the motor. The extended shell sidewall 104 may terminate at an end enclosure 106 adjacent to the seal plate 26, the seal plate 26 connecting the motor to the housing 12. The end enclosure 106 is designed to enclose a front end of the fan shroud 100 and restrict air from traveling out of the fan shroud 100 at locations other than the opening 108 in the upper portion of the shell sidewall 104. The extended shell sidewall 104 may further be configured so as to be slightly spaced apart, partially, or entirely around the circumference of the motor, in order provide an airflow pathway 110 that permits the flow of air along the length of the motor. To provide effective airflow, the extended shell sidewall 104 can be spaced apart from the motor, around the circumference of the motor, at a distance value that results in a ratio of the distance value to the diameter of the motor that is between five to one and twenty-five to one. Collectively, the fan shroud end cap 102, the shell sidewall 104, and the end enclosure 106 may substantially surround the motor, including the rear bell end, the motor body, and at least part of the shaft portion.

In some forms, the fan shroud end cap 102, the shell sidewall 104, and the end enclosure 106 surround the motor to varying degrees. For example, in some forms, the shell sidewall 104 extends around fifty to eighty percent of the circumference of the motor from the bottom of the motor around toward the drive 22 or from the top of the motor toward the frame component 28. In some forms, the shell sidewall 104 extends around seventy-five to one hundred percent of the circumference of the motor notwithstanding the opening 108. In some forms, the shell sidewall 104 extends from the fan shroud end cap 102 halfway down the length of motor to surround the motor. In some forms, the shell sidewall 104 extends from the fan shroud end cap 102 along twenty-five to one hundred percent of the length of the motor to surround the motor. Accordingly, the shell sidewall 104 surrounds the motor by extending around varying portions of the motor circumference and varying portions of the motor length.

The opening 108 in the shell sidewall 104 is directly adjacent to the drive heat sink 24. The opening 108 may be located directly below the central portion of the drive heat sink 24. The heat sink 24 may include a plurality of vertical fins 34 that extend downward from the drive heat sink 24 and at least partially into the opening 108. Thus, the opening 108 is configured to permit air traveling though the fan shroud 100 to exit the fan shroud 100 by flowing past the fins 34 of the drive heat sink 24 after traveling through the extended shell sidewall 104.

As shown in FIG. 4, the fan shroud 100 is configured to direct the flow of cool air from the fan shroud end cap 102 along the body of the motor and then upward through the opening 108 and across the fins 34 of the drive heat sink 24. Cool air may be drawn into and through the fan shroud end cap 102 by the motor fan (not shown) located within the motor as the motor fan rotates during operation. Once the cool air passes through the fan shroud end cap 102, the air is forced across the surface of the motor body by the shell sidewall 104 that encloses the motor. The drawn-in air effectively cools the motor as it travels along substantially the entire length of the motor. After traveling along at least part of the length of the motor, the air is forced upward toward the opening 108 by the end enclosure 106. As the air exits the fan shroud 100 through the opening 108, it travels across the fins 34 of the drive heat sink 24 and thereby effectively cools the drive 22.

As a result of the configuration of the fan shroud 100, all, or substantially all, of the cool air drawn through the fan shroud 100 by the motor fan first cools the motor, and additionally cools the drive heat sink 24 and the drive 22, thereby providing an efficient path for the cooling air. The fan shroud 100 eliminates the need to separately direct airflow to the motor and the components of the drive 22 of the pump assembly 10, providing more efficient cooling of the motor and the drive 22 during operation of the pump assembly 10.

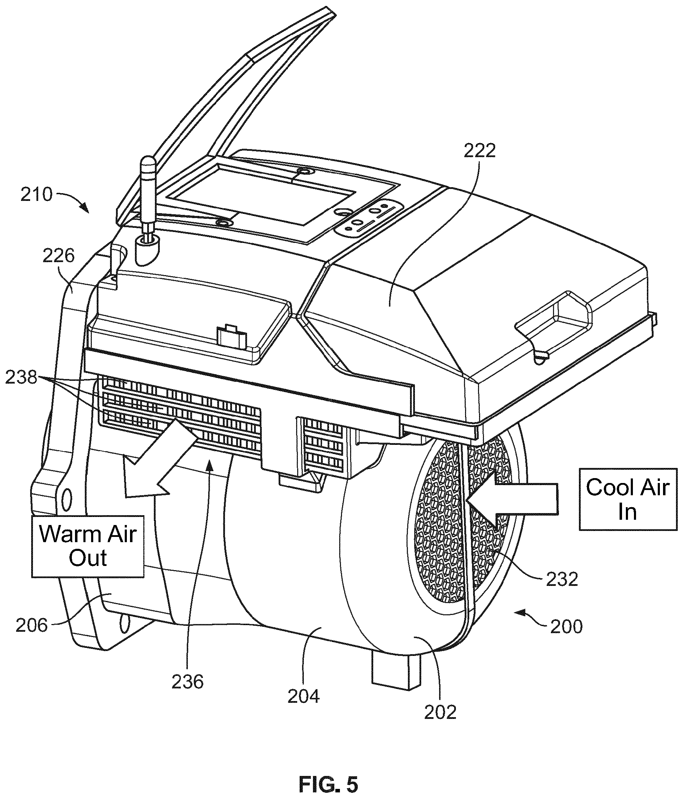

A pump assembly 210 according to an embodiment of the present invention is illustrated in FIG. 5. Similar to the pump assembly 10 described above with respect to FIGS. 3 and 4, the pump assembly 210 includes a seal plate 226, a motor (not shown), a motor fan attached to the motor (not shown), a drive 222, and a fan shroud 200. The fan shroud 200 includes a fan shroud end cap 202 with a vented surface 232 in an end thereof, and an extended shell sidewall 204. The fan shroud 200 extends from a rear bell end of the motor, across a motor body, and extends to, and terminates at, the seal plate 226 at an end enclosure 206. The extended shell sidewall 204 thus abuts the seal plate 226 and covers a shaft portion of the motor. Collectively, the fan shroud end cap 202 and the extended shell sidewall 204 substantially enclose the motor, including both the rear bell end, the motor body, and at least part of the shaft portion.

In addition, the fan shroud 200 includes a heat sink enclosure 236 that extends outward and upward from the extended shell sidewall 204 and surrounds a heat sink of the drive 222. The heat sink enclosure 236 includes slotted louvers 238 to direct air flow from the fan shroud end cap 202 out through the slotted louvers 238. The heat sink enclosure 236 can ensure that air effectively flows past the fins (not shown) of the heat sink, cooling off the drive 222. During operation, the motor fan draws air in through the vented surface 232 of the fan shroud end cap 202, and the extended shell sidewall 104 directs air across the motor, up to and across the fins of the drive heat sink, and out through the slotted louvers 238. Additionally, the slotted louvers 238 can be manufactured to be selectively closed along the length of the heat sink enclosure 236. For example, the slotted louvers 238 may be selectively closed along a horizontal length or a vertical height of the heat sink enclosure 236. In some forms, the slotted louvers 238 can be selectively closed at a diagonal angle along the heat sink enclosure 236. Accordingly, selectively closing the slotted louvers 238 encourages air drawn in through the vented surface 232 to flow across the components within the fan shroud 200 that heat the fastest or reach the highest temperatures during operation of the pump assembly 210.

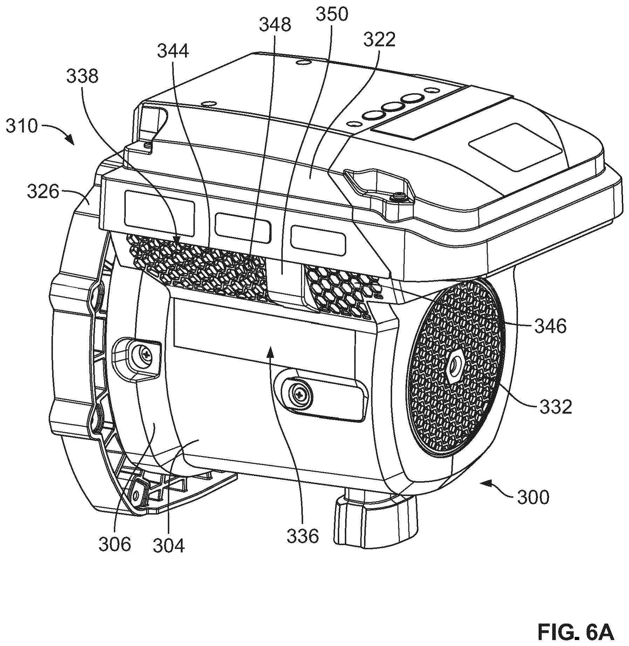

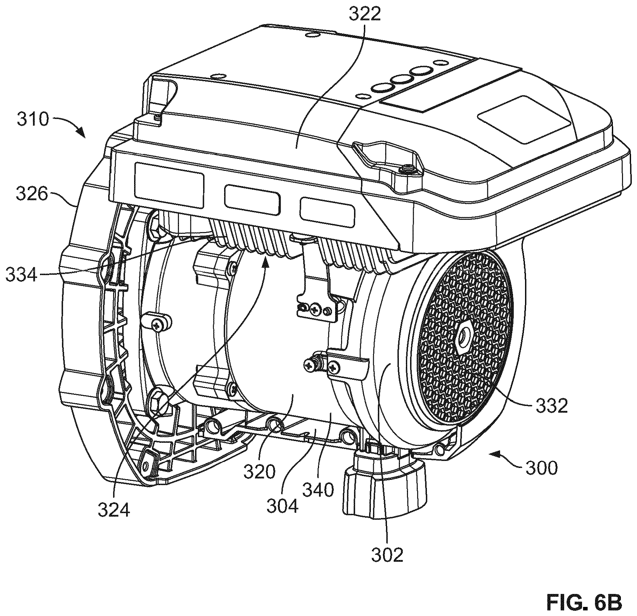

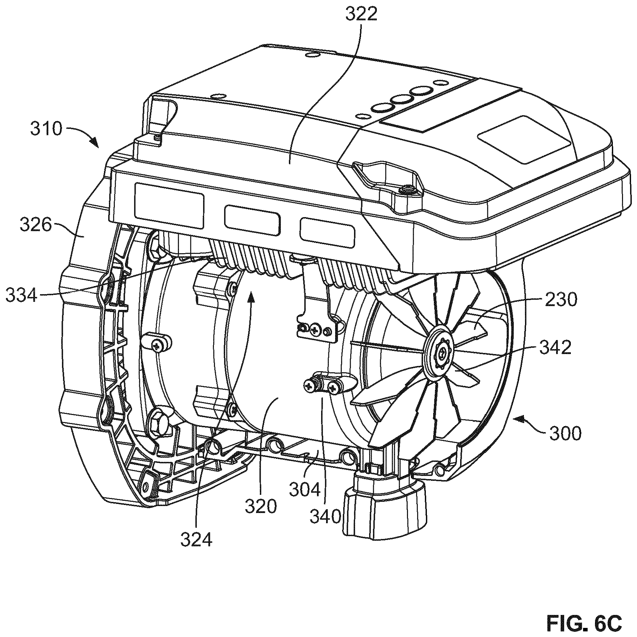

FIGS. 6A-6C illustrate a pump assembly 310 according to a further embodiment of the present invention. Similar to the pump assemblies 10 and 210 described above with respect to FIGS. 3-5, the pump assembly 310 includes a seal plate 326, a motor 320 (see FIG. 6B) with a motor housing 340, a motor fan 342 attached to the motor 320, a drive 322, and a fan shroud 300. The fan shroud 300 includes a fan shroud end cap 302 with a vented surface 332, and an extended shell sidewall 304. The fan shroud 300 extends from a rear bell end of the motor 320, across the motor housing 340, and extends to, and terminates at, the seal plate 326. The extended shell sidewall 304 thus abuts the seal plate 326 to form an end enclosure 306.

Further, the fan shroud 300 can include an upper heat sink enclosure 336 that extends outward and upward from the extended shell sidewall 304 and surrounds a heat sink 324 of the drive 322. The upper heat sink enclosure 336 can include a plurality of vents 338 positioned adjacent fins 334 which extend from the heat sink 324 downward from the drive 322. During operation, the motor fan 342 draws air in through the vented surface 332 of the fan shroud end cap 302, and the extended shell sidewall 304 directs air across the motor housing 340, up to the fins 334, across the fins 334 of the drive heat sink 324, and out through the vents 338. In some embodiments, the vents 338 are positioned symmetrically on both sides of the heat sink enclosure 336 with respect to a plane extending from the rear bell end of the motor 320 toward the seal plate 326 and through a vertical axis of the motor 320.

In some forms, the shell sidewall 304 can be comprised of multiple parts that are coupled together using fasteners, connectors, adhesives, welding or other suitable connection means. For example, the shell sidewall 304 can include two halves, each half of which is secured independently to the motor housing 340. Also, the shroud end cap 302 can be fastened independently to the motor housing 340. Thus, the fan shroud 300 can comprise modular parts that can be installed or removed independently, allowing access to the motor housing 340, the motor fan 342, and the heat sink 324. Alternatively, the fan shroud 300 can be composed of a single, integral part.

In some forms, the fan shroud end cap 302, the shell sidewall 304, and the heat sink enclosure 336 surround the motor 320 to varying degrees. For example, in some forms, the shell sidewall 304 extends around fifty to eighty percent of the circumference of the motor 320 from the bottom of the motor 320 around toward the drive 322 or from the top of the motor 320 toward the bottom of the motor 320. In some forms, the shell sidewall 304 extends around seventy-five to one hundred percent of the circumference of the motor 320 notwithstanding the heat sink enclosure 336, which can fully or partially complete the enclosing of the remaining circumference of the motor 320 not surrounded by the shell sidewall 304.

In some forms, the shell sidewall 304 extends from the fan shroud end cap 302 halfway down the length of motor 320 to surround the motor. In some forms, the shell sidewall 304 extends from the fan shroud end cap 302 along the twenty-five to one hundred percent of length of the motor 320 to surround the motor 320. Further, the shell sidewall 304 can include internal baffles that extend around at the motor 320. For example, in some forms, the shell sidewall 304 includes one or more arcuate baffles that extend partially around the circumference of the motor housing 340 between the motor 320 and the heat sink 324. The arcuate baffles encourage air to flow adjacent to the motor housing 340 and further around the outside of the motor housing 340 toward the top of the motor 320 and toward the center of the heat sink 324 before exiting the fan shroud 300 via the vents 338. Accordingly, the shell sidewall 304, the fan shroud end cap 302, and the heat sink enclosure 336 surround the motor by extending around varying portions of the motor circumference and varying portions of the motor length.

Generally, the vents 338 may be provided in the form of vent openings 344 that can be formed in a number of shapes to facilitate air flow. More specifically, the vent openings 344 may be defined by a matrix or lattice of honeycombs or angled slats as depicted in the embodiments described herein. Further, the vents 338 can be manufactured to be partially blocked along the length of the heat sink enclosure 336. For example, the vent openings 344 depicted in FIGS. 6A-7C may be provided in the form of a first rear vent section 346 and a second front vent section 348. The first rear vent section 346 extends from adjacent the shroud end cap 302 to a divider 350, and the second front vent section 348 extends from the divider 350 to adjacent the seal plate 326. In some forms, the divider 350 is replaced with additional vent openings 344. As shown in FIGS. 6A-6C, the first rear vent section 346 is entirely closed to prevent airflow, and the second front vent section 348 is entirely open to allow airflow. Accordingly, the vent openings 344 are open for a length comprising about fifty percent of the length of the heat sink enclosure 336, from the divider 350 to adjacent the seal plate 326.

The vent openings 344 of the rear vent section 346 can be partially or fully blocked to prevent airflow, and the vent openings 344 of the front vent section 348 can be partially or fully open to allow air to pass through. By partially or fully blocking the rear vent section 346, the heat sink enclosure 336 prevents air from exiting the fan shroud 300 too early or until the air has traveled farther away from the fan shroud end cap 302 and across the surface of the motor housing 340 if the rear vent section 346 was not partially or fully blocked. The blocked vents and the unblocked vents can be distributed along the heat sink enclosure 336 in various ratios.

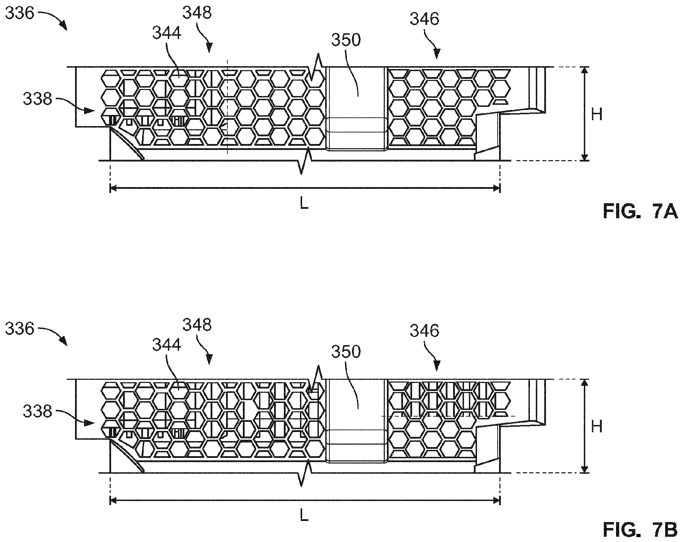

For example, as shown in FIG. 7A, in one embodiment, all of the vent openings 344 in the rear vent section 346 are blocked, and some of the vent openings 344 in the front vent section 348 are blocked along at least part of a horizontal length L of the heat sink enclosure 336. Thus, the vent openings 344 are open for a length comprising less than fifty percent of the horizontal length L of the heat sink enclosure 336. In some forms, two-thirds of the vent openings 344 may be blocked along the horizontal length L of the heat sink enclosure 336 and one-third of the vent openings 344 may be open. Any ratio of the vent openings 344 of one or both of the front vent section 348 and the rear vent section 346 may be blocked or open along at least part of the horizontal length L of the heat sink enclosure 336.

As shown in FIG. 7B, in some forms, all of the vent openings 344 of the front vent section 348 are open, and some of the vent openings 344 of the rear vent section 346 are blocked along about fifty percent of a vertical height H of the heat sink enclosure 336. In some forms, two-thirds of the vent openings 344 may be blocked along part of the vertical height of the heat sink enclosure 336 and one-third of the vent openings 344 may be open. Any ratio of the vent openings 344 of one or both of the front vent section 348 and the rear vent section 346 may be blocked or open along at least part of the vertical height H of the heat sink enclosure 336.

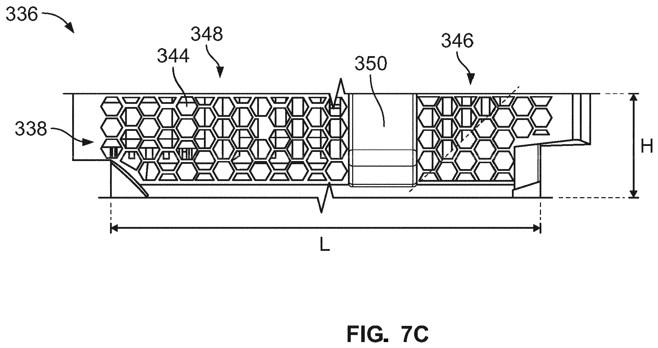

As shown in FIG. 7C, in some forms, all of the vent openings 344 of the front vent section 348 are open, and some of the vent openings 344 of the rear vent section 346 are blocked diagonally along part of the horizontal length L and part of the vertical height H of the heat sink enclosure 336. Any ratio of the vent openings 344 of one or both of the front vent section 348 and the rear vent section 346 of the heat sink enclosure 336 may be blocked diagonally at a variety of diagonal angles while the remaining vent openings 344 are open.

Although FIGS 7A-C illustrate blocking the vent openings 344 along a horizontal length L of the heat sink enclosure 336, along a vertical height H of the heat sink enclosure 336, and along a diagonal angle of the heat sink enclosure 336 respectively, any combination of these configurations can be provided. For example, part of the vent openings 344 of the rear vent section 346 can be blocked along a diagonal angle, while also part of the vent openings 344 of the front vent section 348 can be blocked along the horizontal length L and part of the vent openings 344 of the front vent section 348 can be blocked along the vertical height H of the heat sink enclosure 336.

Further, in some forms, although the vents 338 can be positioned symmetrically on either side of the heat sink enclosure 336, with respect to the plane extending from the rear bell end of the motor 320 toward the seal plate 326 and through a vertical axis of the motor 320, the selective blocking of vent openings 344 can be arranged asymmetrically with respect to one side of the heat sink enclosure 336 versus the other (other side not shown). For example, the rear vent section 346 may be blocked on one side of the heat sink enclosure 336 according to any of the arrangements listed above but be blocked according to another of the arrangements listed above on the other side of the heat sink enclosure 336. By asymmetrically blocking the vents 338 with respect to the plane extending from the rear bell end of the motor 320 toward the seal plate 326 and through a vertical axis of the motor 320, a higher airflow is encouraged on one side of the heat sink enclosure 336 versus the other to provide a lateral bias of airflow.

Accordingly, the selective arrangement of blocked/open vent openings 344 can force air drawn-in through the vented surface 332 and along the parts of the motor housing 340 and the heat sink 324 that heat the fastest or reach the highest temperatures during operation of the pump assembly 310. For example, the selective arrangement of blocked/open vent openings 344 can be used to target high heat areas of the drive 322 that occur in localized positions along the horizontal length L, the vertical height H, or on a particular side of the heat sink enclosure 336.

The fan shroud 100, 200, 300 (and the components thereof) may be constructed from any suitable material, including without limitation, plastic or polymer-based materials, metals, composites, or any combination thereof. As described herein, the fan shroud 100, 200, 300 may form a substantially enclosed shell or enclosure around the motor 320 and may function to protect the motor 320 from damage and/or environmental effects (such as rain, moisture, heat, etc.). As a result, the fan shroud 100, 200, 300 may reduce or eliminate the need for the housing of the motor 320 to be coated or treated to protect against moisture and environmental effects, which can reduce the costs of the components of the motor 320 and/or the pump assembly 10, 210, 310.

From the foregoing, it will be seen that this invention is one well-adapted to attain all the ends and objects set forth above together with other advantages which are obvious and which are inherent to the structure. It will be understood that certain features and-subcombinations are of utility and may be employed without reference to other features and sub-combinations. Since many possible embodiments of the invention may be made without departing from the scope thereof, which is solely defined by the appended claims, it is also to be understood that all matters herein set forth or shown in the accompanying drawings are to be interpreted as illustrative and not limiting.

Features which are described in the context of separate embodiments may also be provided in combination in a single embodiment. Conversely, various features which are, for brevity, described in the context of a single embodiment, may also be provided separately or in any suitable sub-combination, the scope of the invention being however solely defined by the appended claims.

The constructions described above and illustrated in the drawings are presented by way of example only and are not intended to limit the scope of the present invention as defined by the appended claims. Thus, there has been shown and described several embodiments of a novel invention. As is evident from the foregoing description, certain aspects of the present invention are not limited by the particular details of the examples illustrated herein, and it is therefore contemplated that other modifications and applications, or equivalents thereof, will occur to those skilled in the art. The terms "comprising", "having" and "including" and similar terms as used in the foregoing specification are used in the sense of "optional" or "may include" and not as "required". The term "a" or "an" does not exclude a plurality, a single means or feature may fulfil the functions of several means recited in the claims, and vice versa, and any reference signs in the claims shall not be construed as limiting the scope of the claims. Many changes, modifications, variations and other uses and applications of the present construction will, however, become apparent to those skilled in the art after considering the specification and the accompanying drawings. Changes, modifications, variations and other uses and applications which do not depart from the scope of the invention are deemed to be covered by the invention which is limited only by the claims which follow.

## Claims

1. A pump assembly (10, 210, 310) comprising:
a pump (14);
a motor (320) configured to power the pump;
a drive (22, 222, 322) for controlling the motor; and
a fan shroud (100), the fan shroud comprising:
a fan shroud end cap (102, 202, 302) coupled to a rear bell end of the motor, the fan shroud end cap having a vented surface (32, 232, 332) for receiving cool air drawn by a motor fan (342) during operation of the motor; and
an extended shell sidewall (104, 204, 304) extending from the fan shroud end cap and across a length of the motor, the extended shell sidewall having a vent (108) adjacent the drive; and
a drive heat sink (24, 324) adjacent the drive and adjacent the vent;
wherein the fan shroud end cap and the extended shell sidewall surround the motor; and
wherein the extended shell sidewall extends up to and abuts a seal plate (26, 226, 326) of the pump.

2. The pump assembly of claim 1, wherein the extended shell sidewall (104, 204, 304) is spaced apart from the motor (320) along the length of the motor to allow air flow from the fan shroud end cap (102, 202, 302) to the seal plate (26, 226, 326).

3. The pump assembly of claim 1 or claim 2, wherein the length is substantially an entire length of the motor.

4. The pump assembly of claim 1, claim 2 or claim 3, further comprising an end enclosure (106, 206, 306) configured to enclose the extended shell sidewall around an end of the motor opposite the fan shroud end cap.

5. The pump assembly of claim 1 or of any of claims 2 to 4, further comprising a heat sink enclosure (236, 336) extending from the extended shell sidewall and surrounding the drive heat sink of the drive, wherein the vent is positioned on the heat sink enclosure.

6. The pump assembly of claim 5, wherein the vent is positioned adjacent fins (34, 334) that extend from the drive heat sink and downward from the drive.

7. The pump assembly of claim 5 or claim 6, wherein the vent includes a plurality of vent openings (344) formed as a lattice of honeycombs, wherein a portion of the plurality of vent openings are blocked, and, optionally or preferably, wherein the plurality of vent openings comprise rear vents near the fan shroud end cap that are blocked and front vents near the seal plate of the pump that are fully open.

8. The pump assembly of claim 7, wherein the portion of the plurality of vent openings (344) that are blocked are blocked along one of a horizontal direction from the fan shroud end cap (102, 202, 302) toward the seal plate (26, 226, 326) of the pump (14), a vertical direction from the motor (320) toward the drive (22, 222, 322), or a diagonal direction.

## Patentansprüche

1. Pumpenanordnung (10, 210, 310) umfassend:
eine Pumpe (14);
einen Motor (320), der zum Betreiben der Pumpe konfiguriert ist;
einen Antrieb (22, 222, 322) zum Steuern des Motors; und
eine Lüfterhaube (100), wobei die Lüfterhaube Folgendes umfasst:
eine Lüfterhaubenendkappe (102, 202, 302), die mit einem hinteren Glockenende des Motors gekoppelt ist, wobei die Lüfterhaubenendkappe eine belüftete Oberfläche (32, 232, 332) aufweist, um während des Betriebs des Motors von einem Motorlüfter (342) angesaugte kühle Luft aufzunehmen; und
eine verlängerte Schalenseitenwand (104, 204, 304), die sich von der Lüfterhaubenendkappe und über eine Länge des Motors erstreckt, wobei die verlängerte Schalenseitenwand eine Belüftung (108) neben dem Antrieb aufweist; und
ein Antriebs-Wärmeableitkörper (24, 324) neben dem Antrieb und neben der Belüftung;
wobei die Lüfterhaubenendkappe und die verlängerte Schalenseitenwand den Motor umgeben; und
wobei sich die verlängerte Schalenseitenwand bis zu einer Dichtungsplatte (26, 226, 326) der Pumpe erstreckt und anliegt.

2. Pumpenanordnung nach Anspruch 1, wobei die verlängerte Schalenseitenwand (104, 204, 304) entlang der Länge des Motors von dem Motor (320) abgesetzt ist, um einen Luftstrom von der Lüfterhaubenendkappe (102, 202, 302) zu der Dichtungsplatte (26, 226, 326) zu ermöglichen.

3. Pumpenanordnung nach Anspruch 1 oder Anspruch 2, wobei die Länge im Wesentlichen eine ganze Länge des Motors ist.

4. Pumpenanordnung nach Anspruch 1, Anspruch 2 oder Anspruch 3, die weiter ein Endgehäuse (106, 206, 306) umfasst, das so konfiguriert ist, dass es die verlängerte Schalenseitenwand um ein der Lüfterhaubenendkappe gegenüberliegendes Ende des Motors umgibt.

5. Pumpenanordnung nach Anspruch 1 oder einem der Ansprüche 2 bis 4, die weiter ein Wärmeableitgehäuse (236, 336) umfasst, das sich von der verlängerten Schalenseitenwand erstreckt und den Antriebs-Wärmeableitkörper des Antriebs umgibt, wobei die Belüftung auf dem Wärmeableitgehäuse positioniert ist.

6. Pumpenanordnung nach Anspruch 5, wobei die Belüftung benachbart zu den Rippen (34, 334) angeordnet ist, die sich von dem Antriebs-Wärmeableitkörper nach unten erstrecken.

7. Pumpenanordnung nach Anspruch 5 oder Anspruch 6, wobei die Belüftung eine Vielzahl von Belüftungsöffnungen (344) einschließt, die als Wabengitter angeordnet sind, wobei ein Abschnitt dieser Belüftungsöffnungen blockiert ist, und wobei optional oder bevorzugt die Belüftungsöffnungen hintere Belüftungen in der Nähe der Lüfterhaubenendkappe umfassen, die blockiert sind, sowie vordere Belüftungen in der Nähe der Dichtungsplatte der Pumpe, die vollständig geöffnet sind.

8. Pumpenanordnung nach Anspruch 7, wobei der Abschnitt der Vielzahl von Belüftungsöffnungen (344), die blockiert sind, entlang einer horizontalen Richtung von der Lüfterhaubenendkappe (102, 202, 302) zur Dichtungsplatte (26, 226, 326) der Pumpe (14), einer vertikalen Richtung von dem Motor (320) zu dem Antrieb (22, 222, 322) oder einer diagonalen Richtung blockiert ist.

## Revendications

1. Ensemble (10, 210, 310) pompe comprenant :
une pompe (14) ;
un moteur (320) configuré pour alimenter la pompe ;
un entraînement (22, 222, 322) pour commander le moteur ; et
un déflecteur (100) de ventilateur, le déflecteur de ventilateur comprenant :
un capuchon (102, 202, 302) d'extrémité de déflecteur de ventilateur couplé à une extrémité tulipe arrière du moteur, le capuchon d'extrémité de déflecteur de ventilateur présentant une surface (32, 232, 332) ventilée pour recevoir de l'air froid aspiré par un ventilateur (342) de moteur pendant le fonctionnement du moteur ; et
une paroi latérale (104, 204, 304) de coque étendue s'étendant à partir du capuchon d'extrémité de déflecteur de ventilateur et sur une longueur du moteur, la paroi latérale de coque étendue présentant un évent (108) adjacent à l'entraînement ; et
un dissipateur (24, 324) thermique d'entraînement adjacent à l'entraînement et à l'évent ;
dans lequel le capuchon d'extrémité de déflecteur de ventilateur et la paroi latérale de coque étendue entourent le moteur ; et
dans lequel la paroi latérale de coque étendue s'étend jusqu'à et est en butée contre une plaque (26, 226, 326) d'étanchéité de la pompe.

2. Ensemble pompe selon la revendication 1, dans lequel la paroi latérale (104, 204, 304) de coque étendue est espacée du moteur (320) sur toute la longueur de celui-ci afin de permettre le flux d'air depuis le capuchon (102, 202, 302) d'extrémité de déflecteur de ventilateur vers la plaque (26, 226, 326) d'étanchéité.

3. Ensemble pompe selon la revendication 1 ou la revendication 2, dans lequel la longueur correspond sensiblement à la longueur totale du moteur.

4. Ensemble pompe selon la revendication 1, la revendication 2 ou la revendication 3, comprenant en outre un boîtier (106, 206, 306) d'extrémité configuré pour enfermer la paroi latérale de coque étendue autour d'une extrémité du moteur opposée au capuchon d'extrémité de déflecteur de ventilateur.

5. Ensemble pompe selon la revendication 1 ou l'une quelconque des revendications 2 à 4, comprenant en outre un boîtier (236, 336) de dissipateur thermique s'étendant à partir de la paroi latérale de coque étendue et entourant le dissipateur thermique d'entraînement de l'entraînement, dans lequel l'évent est positionné sur le boîtier de dissipateur thermique.

6. Ensemble pompe selon la revendication 5, dans lequel l'évent est positionné avec des ailettes (34, 334) adjacentes qui s'étendent depuis le dissipateur thermique d'entraînement et vers le bas depuis l'entraînement.

7. Ensemble pompe selon la revendication 5 ou la revendication 6, dans lequel l'évent inclut une pluralité d'ouvertures (344) d'évent formées comme un réseau de nids d'abeilles, dans lequel une partie de la pluralité d'ouvertures d'évent sont bloquées, et, facultativement ou de préférence, dans lequel la pluralité d'ouvertures d'évent comprennent des évents arrière près du capuchon d'extrémité de déflecteur de ventilateur qui sont bloqués et des évents avant près de la plaque d'étanchéité de la pompe qui sont complètement ouverts.

8. Ensemble pompe selon la revendication 7, dans lequel la partie de la pluralité d'ouvertures (344) d'évent qui sont bloquées est bloquée le long d'une direction horizontale à partir du capuchon (102, 202, 302) d'extrémité de déflecteur de ventilateur vers la plaque (26, 226, 326) d'étanchéité de la pompe (14), une direction verticale du moteur (320) vers l'entraînement (22, 222, 322), ou une direction diagonale.
